Europäisches Patentamt

European Patent Office

Office européen des brevets

(11) Veröffentlichungsnummer: **0 225 939 B1**

# EUROPÄISCHE PATENTSCHRIFT

(45) Veröffentlichungstag der Patentschrift: **17.07.91**

(51) Int. Cl.⁵: **C21C 5/56**, C21C 5/52, F27D 13/00

(21) Anmeldenummer: **85116373.3**

(22) Anmeldetag: **20.12.85**

(54) **Verfahren zum Einschmelzen von Schrott o.dgl. und Vorrichtung zur Durchführung des Verfahrens.**

(43) Veröffentlichungstag der Anmeldung:
**24.06.87 Patentblatt 87/26**

(45) Bekanntmachung des Hinweises auf die Patenterteilung:
**17.07.91 Patentblatt 91/29**

(84) Benannte Vertragsstaaten:
**AT CH DE FR GB IT LI SE**

(56) Entgegenhaltungen:
**EP-A- 0 167 915**
**GB-A- 895 534**
**US-A- 2 382 534**
**US-A- 3 880 648**
**US-A- 4 506 370**

(73) Patentinhaber: **MANNESMANN Aktiengesellschaft**
**Mannesmannufer 2**
**W-4000 Düsseldorf 1(DE)**

(72) Erfinder: **Meierling, Peter, Dr.**
**Am oberen Werth 3**
**W-4000 Düsseldorf 31(DE)**

(74) Vertreter: **Meissner, Peter E., Dipl.-Ing. et al**
**Patentanwaltsbüro Meissner & Meissner,**
**Herbertstrasse 22**
**W-1000 Berlin 33(DE)**

## Beschreibung

Die Erfindung bezieht sich auf ein Verfahren zum Einschmelzen von Schrott 0. dgl. Materialien in mindestens einem Einschmelzofen, insbesondere einem mit einer Lichtbogenbeheizung versehenen Ofen, bei dem der Schrott durch unter Zufuhr eines sauerstoffhaltigen Gases nachverbrannte Abgase des Einschmelzofens in mindestens einem in den Einschmelzofen entleerbaren Gefäß direkt vorgewärmt wird.

Schrottvorwärmverfahren dieser Art sind in größerer Anzahl vorbekannt. Bei diesen Verfahren wird in der Regel angestrebt, die in den Abgasen des Einschmelzofens enthaltene Energie, bestehend aus der fühlbaren und der latenten Wärme, möglichst vollständig zu nutzen, indem ein möglichst großer Teil des heißen Abgases durch ein Vorwärmgefäß geleitet wird, wobei das Vorwärmgefäß in vielen Fällen gleichzeitig der Schrottchargierkorb ist, der zum Erhitzen des Schrotts in einer Vorwärmstation angeordnet wird und nach erfolgter Vorwärmung von hier aus mittels eines Krans über das geöffnete Einschmelzgefäß gefahren und dort entleert wird. Mit dem Transportieren des Vorwärm-Gefäßes sind erhebliche Wärmeverluste verbunden. Für den Fall, daß das Gefäß feuerfest ausgekleidet oder wassergekühlt ist, wodurch höhere Vorwärmtemperaturen erzielbar sind, bereitet die Haltbarkeit solcher Gefäße, insbesondere bei deren Transport, erhebliche Schwierigkeiten.

Eine Lichtbogenofeneinrichtung zur Durchführung eines solchen Verfahrens ist vorbekannt aus der US-A-4 586 370. Hierbei ist der Lichtbogenofen stationär angeordnet und ein Vorwärmgefäß in drei verschiedene Stellungen, nämlich die Entleerungs-, die Beheizungs- und Beschickungsposition, verfahrbar. Nachteilig ist bei dieser Einrichtung vor allem, daß die für die Beheizung des Vorwärmgefäßes vorgesehenen Anschlüsse, insbesondere für die Gasführung, vor jedem Entleerungs- und Beschickungsvorgang entfernt und anschließend wieder verbunden werden müssen, wobei für das Beschicken außerdem noch die den Ofen und die Vorwärmstation umkleidende Einhängung verlassen werden muß, und wobei es ferner schwierig ist, den Ofendeckel und die Elektroden zum Beschicken des Ofens über diesem zu entfernen.

Eine weitere Lichtbogenofeneinrichtung ist vorbekannt aus der GB-A-895 534. Diese umfaßt zwei auf einer Drehschreibe angeordnete gleich ausgebildete muldenartige Herde, die wechselweise unter einen Schacht und unter einen mit Elektroden versehenen Deckel bringbar sind, wobei der Deckel und der Schacht eine gemeinsame feststehende Abdeckung für die Drehscheibe mit den beiden Herden bildet. Für den Betrieb dieser Einrichtung ist ein dreistufiges Verfahren vorgesehen, indem der Schrott im Schacht auf etwa 600 °C durch Abgase vorgewärmt, danach in dem unter dem Schacht befindlichen Herd mittels Brennern in einer zweiten Stufe auf etwa 1200 °C erhitzt und schließlich in einer dritten Stufe mit den Elektroden eingeschmolzen wird. Das Verfahren gehört damit einer anderen Gattung an. Außerdem ist die zugehörige Einrichtung praktisch kaum zu realisieren.

Der Erfindung liegt die Aufgabe zugrunde, ein Verfahren der eingangs genannten Art und eine zugehörige Vorrichtung zu schaffen, mit denen nicht nur die in den Abgasen des Einschmelzgefäßes enthaltene Energie besser genutzt und für das Einschmelzen im Einschmelzgefäß benötigte, insbesondere teure elektrische Energie eingespart wird, sondern auch eine große Flexibilität hinsichtlich der Verfahrensführung und der Anlagen-Gestaltung erzielt wird. Die Lösung dieser Aufgabe besteht in den Merkmalen des kennzeichnenden Teils des Anspruchs 1 bzw. 10.

Das neue Verfahren bringt eine Reihe von Vorteilen mit sich: Dadurch daß der Einschmelzofen nur einen sehr kleinen Weg von der Beschickungs- bis zur Einschmelzstation und zurück in horizontaler Richtung bewegt zu werden braucht, werden die sonst mit dem Beschickungsvorgang verbundenen Wärmeverluste nahezu vollständig vermieden. Der zurückzulegende Weg beträgt im günstigsten Fall nur wenig mehr als der Durchmesser der beiden im Durchmesser aufeinander abgestimmten Gefäße. Auch die Abgaszufuhrleitung zwischen Einschmelzofen und Vorwärmgefäß kann entsprechend kurz ausgeführt werden.

Als Einschmelzofen kommen neben den durch hohe Energiezufuhr kurze Einschmelzzeiten bedingten Lichtbogenöfen, wie wechsel- oder gleichstrombeheizte elektrische Lichtbogenöfen oder Plasmaöfen auch andere bekannte Einschmelzöfen, wie brennerbeheizte Gefäße oder Sauerstoffaufblas- oder Durchblaskonverter in Betracht.

Auch hinsichtlich der Anzahl der verwendeten Einschmelzöfen und Vorwärm-Gefäße ist das neue Verfahren äußerst flexibel. Je nach Größe der Anlage und den eingesetzten Materialien können Eirschmelzöfen und Vorwärm-Gefäße entsprechend den jeweiligen Anforderungen einander zugeordnet werden.

Ein weiterer Vorteil besteht darin, daß die vorwärmenden Materialien nicht auf Schrott und auch nicht auf bestimmte Schrottsorten beschränkt sind. Bei der Stahlerzeugung kommen neben Stahlschrott auch Eisenschwamm, Roheisenmasseln und vorreduziertes Erz in Betracht. Für die Erzeugung legierter oder hochlegierter Stähle sowie auch für die Nichteisenmetallurgie können neben den die entsprechenden Legierungsträger enthaltenden Schrottsorten die handelsüblichen Legierungseinsätze wie z.B. Ferrochrom, Ferronickel, Ferromangan u.a. eingesetzt werden. Dadurch, daß das Vorwärm-Gefäß nicht bewegt zu werden braucht, kann es relativ groß ausgeführt sein und ist dadurch gut geeignet, sperrige Schrottsorten, Knüppel oder andere schwer zu behandelnde Materialien einzusetzen.

Durch den kurzen Weg, den das Abgas zwischen Einschmelzofen und Vorwärm-Gefäß zurücklegt, sind die Temperaturverluste gering, so daß hohe Vorwärmtemperaturen allein durch das Abgas erzeugt werden können. Zur weiteren Temperaturerhöhung können die Abgase in bekannter Weise nachverbrannt werden und zusätzliche Energie, bevorzugt durch preiswerte Brennerbeheizung eingebracht werden. Durch die erzielbaren hohen Vorwärmtemperaturen des Schrotts, die bis zu 900 °C und darüber betragen können, wird eine Kühlung der Leitungen und des Gefäßes erforderlich, wobei die anfallende Abwärme vorteilhaft zum Vorwärmen der zur Nachverbrennung der Abgase eingesetzten Luft verwendet wird. Der Boden der Vorwärm-Gefäße wird vor Temperatureinwirkungen vorzugsweise dadurch geschützt, daß vor dem Schrott-Chargieren Kalk und/oder andere Zuschlagstoffe, wie Flußmittel o.dgl., in das Gefäß eingebracht werden.

Werden in einer Vorwärmstation zwei oder mehrere Gefäße verwendet, so können diese neben- und/oder übereinander angeordnet werden. Bei einer Anordnung nebeneinander werden die Gefäße zweckmäßig in der Gasführung wechselweise hintereinandergeschaltet, so daß in jedem der Gefäße der Schrott durch Zuführung des unmittelbar aus dem Einschmelzofen kommenden noch nicht abgekühlten Abgas auf die erforderlichen hohen Temperaturen erhitzt werden kann. Bei einer Anordnung der Gefäße übereinander wird immer das unterste Gefäß direkt an den Einschmelzofen angeschlossen. Das austretende Abgas durchströmt anschließend das oder die darüber angeordneten Gefäße.

Besonders vorteilhaft ist es, daß die beim Chargieren aus dem Gefäß austretenden Abgase abgesaugt werden. Wegen der stationären Anordnung des oder der Gefäße ist eine solche Maßnahme auf einfache Weise möglich. Dadurch werden insbesondere Geruchsbelästigungen der Umwelt durch die dem Schrott in der Regel anhaftenden öligen Rückstände auf einfache Weise sicher vermieden.

Wirtschaftliche Verfahrenführung auch bei Schwankungen des metallurgischen Einschmelzprozesses und der Beschaffenheit der eingesetzen Materialien wird durch automatische Regelung anhand der gemessenen Zusammensetzung und Temperaturen des Abgases sowie der Beschaffenheitswerte des Schrotts erzielt.

Die Vorrichtung zur Durchführung des Verfahrens bringt insbesondere den Vorteil, daß die Vorwärmstation direkt an die Schrotthalle anschließen kann, so daß die Beschickung des Gefäßes erheblich erleichtert ist.

Dadurch, daß sich das Gefäß nach oben konisch verjüngt, werden Stauungen beim Entleeren des Gefäßes während des Chargierens selbst bei backendem Schrott mit Sicherheit vermieden.

Die Umkleidung der Chargieröffnung des Gefäßes ermöglicht eine erheblich verbesserte Abdichtung und sichere Gasabsaugung auch während des Chargierens.

Erfindungsgemäß wird der Querschnitt des Gefäßes so ausgebildet, daß die Geschwindigkeit der Gasdurchströmung minimiert wird, beispielsweise auf Werte zwischen etwa 1 und 2 m/s. Dadurch wird der Wärmeübergang bei der Gasdurchströmung erheblich verbessert. Der Querschnittsvergrößerung sind dabei lediglich durch die gleichzeitig erforderliche Vergrößerung des Durchmessers des Schmelzofen-Gefäßes Grenzen gesetzt.

Die stationäre Anordnung des Vorwärm-Gefäßes macht es weiterhin möglich, eine besonders wirksame feuerfeste Auskleidung und/oder Kühlung einzusetzen. Die bei der Kühlung abzuführende Wärme kann vorteilhaft im System selbst, insbesondere zur Vorwärmung der für eine Nachverbrennung der Abgase einzusetzenden Luft verwendet werden.

Auch hinsichtlich der Beschickung des Gefäßes besteht durch die Ausbildung nach der Erfindung die Möglichkeit, Chargierkörbe einzusetzen oder eine kontinuierliche Beschickung mittels Bandförderern o.dgl. vorzusehen. Beim Einsatz einer kontinuierlichen Beschickung ist es vorteilhaft, wenn ein nach unten entleerbarer Sammelbehälter zwischengeschaltet ist, der in Größe und Aufbau im wesentlichen mit dem Vorwärm-Gefäß übereinstimmt.

Durch die korbartige Ausbildung der Chargieröffnung durch seitlich wegklappbare Schalen, insbesondere zwei Halbschalen, wobei der Boden der Schalen leicht nach unten durchgewölbt ist, wird ebenfalls ein unbehindertes Chargieren gewährleistet.

Durch die Abdichtung des in der Abgaszufuhr-Leitung vorgesehenen Anschlußstutzens mittels eines Gasschleiers wird die Umweltfreundlichkeit der Vorrichtung weiter verbessert. Dieser Gasschleier kann durch rückgeführtes Abgas oder vorgewärmte Luft, die anschließend zur Nachverbrennung des Abgases eingesetzt wird, gebildet sein. Weiter ist vorgesehen, unter der Chargieröffnung eine mit einer verschließbaren Öffnung für den Durchtritt des Einschmelzofens und mit einer Abgasabsaugung versehene Einkapselung des Einschmelzofens anzuordnen. Dadurch wird die heute insbesondere bei der Verwendung von Elektrolichtbogenöfen allgemein erforderliche teuere Ofeneinhausung eingespart. Für die Restentstaubung der Ofenhalle reicht eine leistungsschwache Absaugeinrichtung aus.

Die Einschmelzstation benötigt lediglich einen mit einem Abgasabzug versehenen heb- und senkbaren Ofendeckel, wobei der Hub sehr gering sein kann, insbesondere dann, wenn zum Abstechen des Einschmelzofens durch Einsatz einer Boden- oder Erkerabstichöffnung keine oder nur geringfügige Kippbewegungen auszuführen hat. Bei größeren Kippbewegungen wird zweckmäßig der Ofendeckel mitgekippt. Sowohl beim Heben wie beim Kippen des Ofendeckels ist ein besonderes Entkuppeln des Anschlußstutzens der Abgaszufuhrleitung bei Einsatz des Gasschleiers nicht erforderlich. Elektroden oder Plasmabrenner, aber auch andere Brenner oder Sauerstofflanzen können vor dem Kippen aus dem Deckel herausgefahren werden. Ein teures Deckelheb- und Schwenkwerk der üblichen Bauart wird auf diese Weise eingespart. Durch besondere Ausbildung des Deckels kann dieser jedoch auch ohne Einsatz einer Hubeinrichtung seitlich verfahren oder verschwenkt werden. Wenn der Einschmelzofen nur in Richtung auf die Vorwärmstation zu bewegt werden muß, ist mit Vorteil auch eine stationäre Anordnung des Ofendeckels durch entsprechende besondere Ausbildung möglich. Das Gefäß des Einschmelzofens wird dann in entsprechend gestaltete z.B. unter einer gewissen Neigung zur Horizontalen angeordnete Abdichtelemente hineingefahren. Bei einer solchen Ausführung ist außerdem die Anordnung einer den gesamten Raum, in welchem der Einschmelzofen bewegt wird, umschließenden Einkapselung ermöglicht.

Das Verfahren nach der Erfindung wird anhand mehrerer in der Zeichnung schematisch dargestellter Ausführungsbeispiele einer Vorrichtung zur Durchführung des Verfahrens näher erläutert. Es zeigen:

Fig. 1     jeweils in einem teilweise senkrechten Schnitt eine Anlage mit einem Vorwärm-Gefäß und einem verfahrbaren Einschmelzofen,

Fig. 2     die Vorwärmstation einer entsprechenden Anlage mit kontinuierlicher Beschickung,

Fig. 3     eine Vorwärmstation einer Anlage mit zwei nebeneinander angeordneten Vorwärm-Gefäßen und einem Ofengefäß und

Fig. 4     das Vorwärmgefäß nach Fig. 1 in größerem Maßstab.

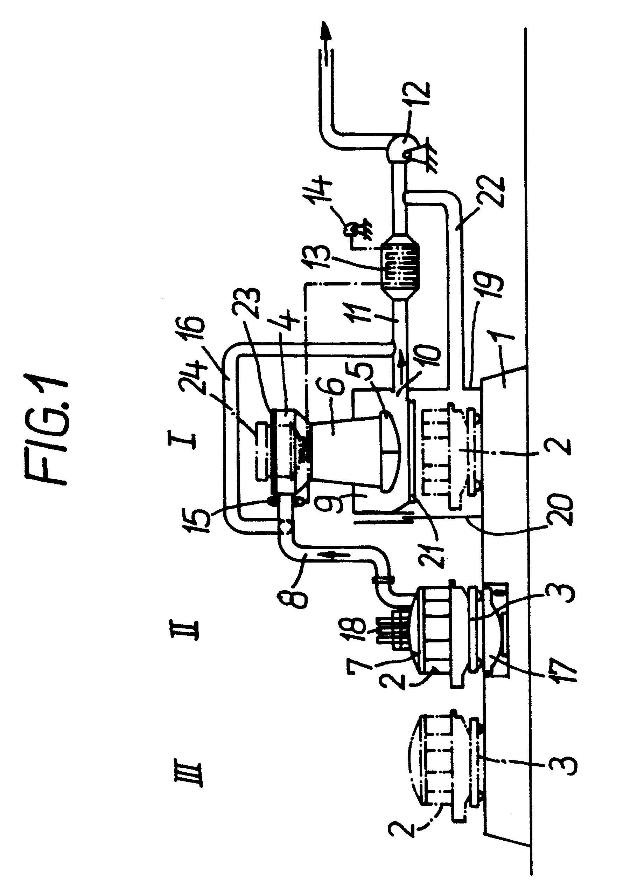

Wie aus Fig. 1 ersichtlich, ist auf einem sockelartigen Hüttenflur 1 der Tiegel 2 eines Elektrolichtbogenofens auf einem Wagen 3 angeordnet, der auf Schienen in einer Richtung zwischen einer Vorwärmstation I , einer Einschmelzstation II und einer Ausbesserungsstation III hin- und her verfahrbar ist. Der wesentliche Teil der Vorwärmstation I wird durch ein am oberen Ende mit einem verschließbaren Einfülltrichter 4 und am unteren Ende mit einer verschließbaren Chargieröffnung 5 versehenes und ein sich nach oben konisch verjüngendes Gefäß 6 gebildet, welches von den Abgasen des Tiegels 2 von oben nach unten durchströmt wird. Das den Tiegel 2 verlassene Abgas wird über eine an den Deckel 7 des Tiegels 2 angeschlossene Abgaszufuhr-Leitung 8 in den Einfülltrichter 4 geleitet und verläßt das Gefäß 6 am unteren Ende über entsprechende Öffnungen in der verschließbaren Chargieröffnung 5. Aus einem Gehäuse 9, das die Chargieröffnung 5 umkleidet, wird das abgekühlte Abgas über eine Öffnung 10 durch eine Abgasabfuhr-Leitung 11 abgesaugt.

Die Abgasabfuhr-Leitung 11, in die ein Saugzuggebläse 12 eingeschaltet ist, mündet in eine nicht dargestellte Filtereinrichtung für die Entstaubung des Abgases. In die Abgasabfuhr-Leitung 11 ist ferner ein Wärmeaustauscher 13 eingeschaltet über welchen durch ein Gebläse 14 zugeführte Luft vorgewärmt und über eine Ringleitung 15 in die Abgaszufuhr-Leitung 8 eingeleitet wird. Der Ort der Lufteinleitung kann je nach Auslegung der betreffenden Anlage differieren; dementsprechend wird die günstigste Anordnung für den Einzelfall jeweils ermittelt. Die Abgaszufuhr-Leitung 8 und die Abgasabfuhr-Leitung 11 sind über eine das Gefäß 6 umgehende, in üblicher Weise absperrbare Bypas-Leitung 16 miteinander verbindbar.

Das Vorwärmverfahren läuft bei dieser Anlage wie folgt ab. Zu Beginn der Einschmelzphase wird das aus dem Tiegel 2 entweichende Abgas bis zum Erreichen ausreichend hoher Temperaturen über die Bypas-Leitung 16 abgeführt. Danach wird bei Bypas-Leitung 16 geschlossen und das Abgas über den gleichzeitig als Brennkammer dienenden Einfülltrichter 4 durch das gefüllte Gefäß 6 hindurchgeleitet und nach Austritt aus dem Gehäuse 9 durch die Abgasabfuhr-Leitung 11 abgesaugt. Die Vorwärmung wird durch Steuerung der Zufuhr von vorgewärmter Luft und ggf. Sauerstoff und ggf. zusätzlicher Brennerbeheizung so geregelt , daß je nach Schrottsorte die erwünschten maximalen Temperaturen am Ende der Einschmelzperiode erreicht sind. Nachdem der Tiegel 2 durch eine exzentrische Bodenabstichöffnung geleert ist, wobei er über eine Wippe 17 leicht gekippt wird, werden die Elektroden 18 aus dem Deckel 7 herausgefahren und der Tiegel 2, wenn erforderlich, zur kurzen Wartung zur Ausbesserungsstation III und anschließend in die Vorwärmstation I verfahren. Die Vorwärmstation I weist unter dem Gehäuse 9 eine Einkapselung 19 auf, die zur Einschmelzstation III hin mit einer falltürartigen verschließbaren Öffnung 20 zum Durchtritt des Tiegels 2 versehen ist. Nachdem die verschließbare Öffnung 20 geschlossen ist, wird zunächst ein in horizontaler Richtung verfahrbarer Absperrschieber 21, der das Gehäuse 9 nach unten hin verschließt, geöffnet und danach die Chargieröffnung 5. Die Chargieröffnung 5 besteht aus zwei Halbschalen welche durch Hochziehen seitlich weggeklappt werden. Infolge zweckmäßig abgestimmter Öffnungsgeschwindigkeiten gelangt der erhitzte Schrott unter Vermeidung von Beschädigungen vollständig in den Tiegel 2. Während des Chargierens wird der Staub aus dem Gehäuse 9 über die Abgasabfuhr-Leitung 11 und gleichzeitig aus der Einkapselung 19 über eine in die Abgasabsaugleitung 11 einmündende Leitung 22 abgesaugt. Der gefüllte Tiegel fährt dann zurück zur Einschmelzstation II zum Einschmelzen der Schrottcharge.

Nachdem die Chargieröffnung 5 und der Schieber 21 wieder geschlossen sind, wird ein den Einfülltrichter 4 oben abdeckend verschließender Schieber 23 seitlich weggefahren und ein Chargierkorb 24 mittels eines Krans in den Einfülltrichter 4 eingeführt. Mittels des in üblicher Weise unten entleerbaren Chargierkorbs 24 wird das Gefäß 6 zunächst mit Kalk beschickt, so daß sich auf den Schalen der Chargieröffnung 5 eine Schutzschicht bildet. Danach wird der Schrott je nach Sperrigkeit bzw. spezifischem Gewicht ein- oder zweimal zugeführt. Nachdem der Schieber 23 wieder geschlossen ist, beginnt der nächste Takt des bereits beschriebenen gleichzeitigen Einschmelz- und Vorwärm-Verfahrens.

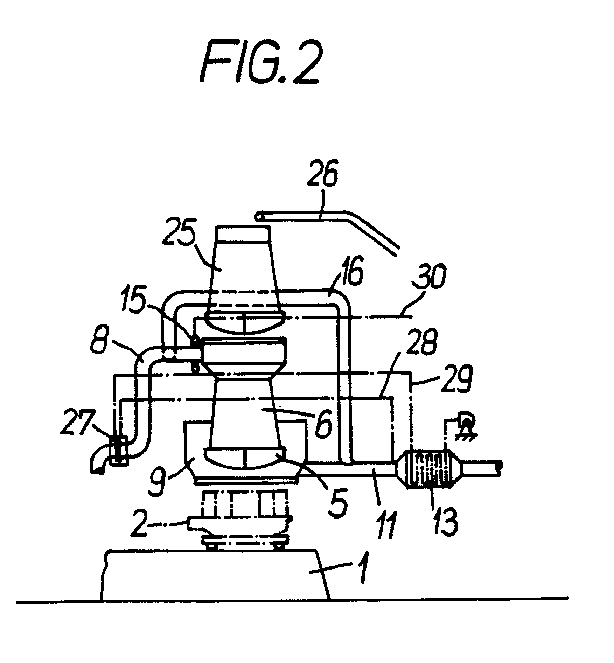

Bei dem in Fig. 2 dargestellten Ausführungsbeispiel ist die Anlage nach Fig. 1 lediglich in der Weise geändert, daß über dem Gefäß ein Sammelbehälter 25 angeordnet ist, welcher bis auf den Einfülltrichter im Aufbau und Volumen dem Gefäß 6 entspricht. In den oben offnen Sammelbehälter 25 wird über einen gekapselten Bandförderer 26 der Schrott und ggf. die erforderlichen Zuschläge eingefüllt. Der Sammelbehälter kann je nach Art des Schrotts und der sonstigen vorzuwärmenden Materialien ebenfalls ein- oder mehrmals in das Gefäß 6 entleert werden. Zur Korbbeschickung kann das Sammelgefäß 25 auch wieder entfernt werden, so daß, wenn erforderlich oder zweckmäßig, beide Beschickungsarten möglich sind.

In Fig. 2 ist außerdem dargestellt, daß an einen in die Abgaszufuhr-Leitung 8 eingeschalteten Anschlußstutzen 27 ein Gasschleier angeschlossen ist, der die Öffnung des Anschlußstutzens 27 abdichtet. Dazu wird Abgas über eine Leitung 28 aus der Abgasabfuhrleitung 11 zurückgeführt oder auch gleichzeitig oder ausschließlich in dem Wärmetauscher 13 vorgewärmte über eine Leitung 29 zugeführte Luft verwendet. Außerdem zur CO-Nachverbrennung noch eingesetzter Sauerstoff wird ferner über eine Leitung 30 wieder der Ringleitung 15 zugeführt.

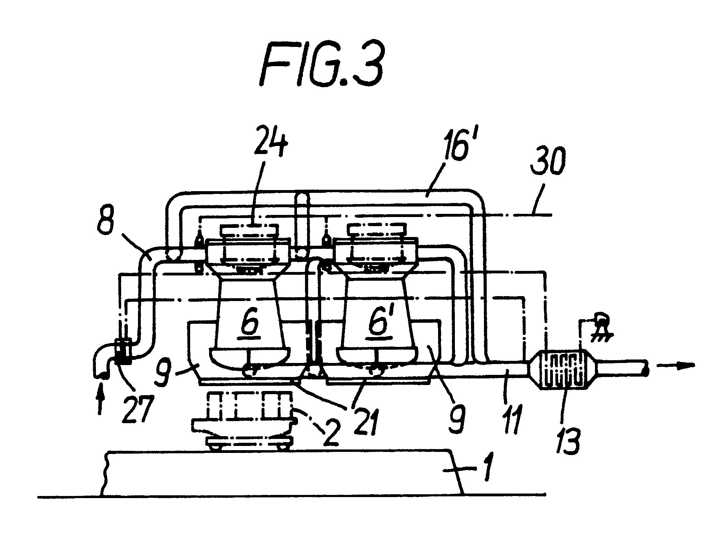

Das Ausführungsbeispiel nach Fig. 3 unterscheidet sich von den vorhergehenden Ausführungsbeispielen dadurch, daß zwei Gefäße 6 und 6' so nebeneinander angeordnet sind, daß der Tiegel 2 jeweils unter beide Gefäße gefahren werden kann. Die Gasführung ist so gestaltet, daß beide Gefäße hintereinander durchströmt werden und wechselweise jedes Gefäß als erstes durchströmt werden kann. Außerdem kann das Abgas durch die Bypas-Leitung 16' auch an beiden Gefäßen vorbeigeführt werden. In der praktischen Ausführung wird im Gegensatz zur vereinfachten Darstellung in der Zeichnung die Anordnung der beiden Gefäße zweckmäßig so vorgenommen, daß die Länge der Abgaszufuhr-Leitung 8 für beide Gefäße etwa gleich ist, wenn das betreffende Gefäß zur Erstdurchströmung an die Abgaszufuhr-Leitung 8 angeschlossen ist. Die übrigen Leitungen und Anschlüsse entsprechen wieder dem Ausführungsbeispiel nach Fig. 2 bzw. nach Fig. 1.

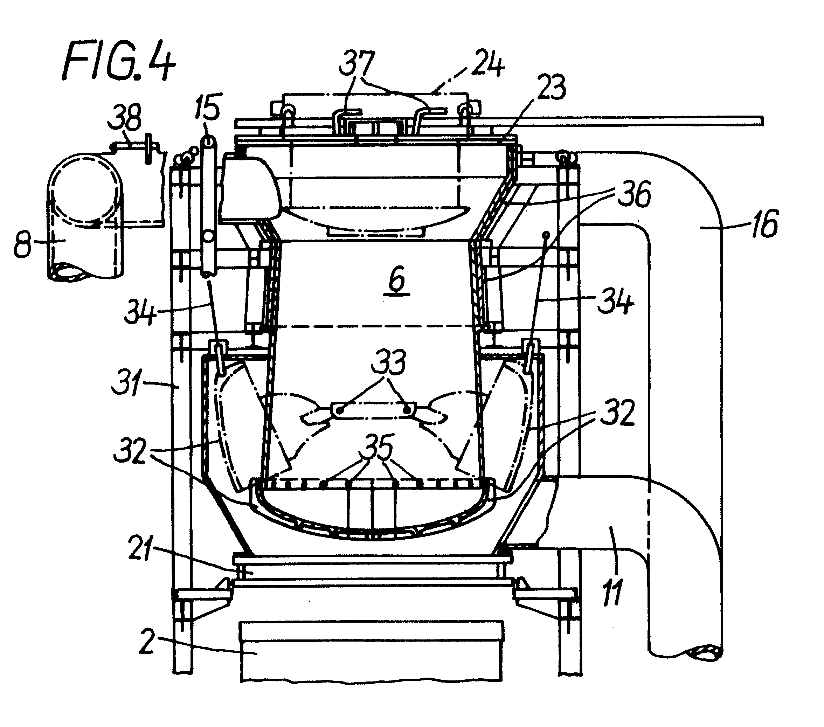

In Fig. 4 ist der Aufbau und die Anordnung des Gefäßes 6 in einem Gestell 31 deutlicher zu erkennen. Die beiden Schalen 32 der korbartigen Chargieröffnung 5 sind jeweils seitlich des Gefäßes 6 an zwei gegenüberliegenden und gleichachsigen Gelenken schwenkbar aufgehängt und können jeweils durch eine Windeneinrichtung 34, die am äußeren Umfang der Schalen mittig angreift, zum Öffnen bzw. Schließen der Chargieröffnung 5 angehoben bzw. abgesenkt werden. Die Schalen 32 weisen außerdem nahe ihrer oberen horizontalen Kante auf den Außenumfang gleichmäßig verteilte Öffnungen 35 für die Abgasabfuhr auf. Die Schalen sind aus hochhitzebeständigem Stahlblech gefertigt. Im oberen Bereich weist die aus einem Gußkörper bestehende Wand des Gefäßes 6 an eine Kühlwassführung angeschlossene Kühlelemente 36 auf. Der abdeckende Schieber 23 ist mit Anschlüssen für fremdbeheizte Brenner 37 versehen. Die Abgaszufuhr-Leitung 8 weist aus Sicherheitsgründen in der Nähe der Einmündung in das obere Ende des Gefäßes 6 eine Explosionsklappe 38 auf. Weitere Explosionsklappen können in dem den Brennraum bzw. Einfülltrichter 4 abdeckenden Schieber 23 angeordnet werden.

Wird beispielsweise ein Einschmelzgefäß eingesetzt, das etwa einen Durchmesser von 5,5 m aufweist, so beträgt bei einer Höhe zwischen Schaftplatte und der Oberkante des Tiegels von 2,6 m das Volumen etwa 72 m³, so daß etwa 65 t eines Schrotts mit einem spezifischen Gewicht von 0,9 chargiert werden können. Die Zeit von Abstich zu Abstich liegt bei einer derartigen Anlage je nach der installierten elektrischen Leistung des Einschmelzofens zwischen 30 und 45 min. Daraus ergibt sich ein Produktivität von etwa 1,2 bis 1,6 t/min. Die Energieausnutzung des Abgases wird auf diese Weise wesentlich erhöht und erhöht sich weiter dadurch, daß die Chargiervorgänge dadurch minimiert werden, daß das Einschmelzgefäß und das Vorwärm-Gefäß im Volumen aufeinander abgestimmt werden.

## Patentansprüche

1. Verfahren zum Einschmelzen von Schrott oder dergleichen Materialien in mindestens einem Einschmelzofen, insbesondere einem mit einer Lichtbogenheizung versehenen Ofen, bei dem der Schrott durch unter Zufuhr eines sauerstoffhaltigen Gases nachverbrannte Abgase des Einschmelzofens in mindestens einem in den Einschmelzofen entleerbaren Gefäß direkt vorgewärmt wird, wobei der Einschmelzofen zum Chargieren des hocherhitzten Schrotts unter das stationär angeordnete und Teil einer Vorwärmestation bildende Gefäß bewegt wird, dadurch gekennzeichnet, daß der Einschmelzofen unmittelbar nach dem Chargieren in die jeweilige Arbeitsstellung zurück bewegt wird.

2. Verfahren nach Anspruch 1, dadurch gekennzeichnet, daß die zugeführte Luft durch im Verfahren anfallende Abwärme vorgewärmt wird.

3. Verfahren nach Anspruch 1 oder 2, dadurch gekennzeichnet, daß zur Vorwärmung zusätzliche Energie eingesetzt wird.

4. Verfahren nach Anspruch 3, dadurch gekennzeichnet, daß die zusätzliche Energie durch Brennerbeheizung eingebracht wird.

5. Verfahren nach einem der vorhergehenden Ansprüche, dadurch gekennzeichnet, daß vor dem Chargieren des Schrotts Zuschlagstoffe, insbesondere Kalk, in das Gefäß eingebracht werden.

6. Verfahren nach einem der vorhergehenden Ansprüche unter Verwendung von einem Einschmelzofen und mindestens zwei im wesentlichen in gleicher Höhenlage angeordneten Gefäßen, dadurch gekennzeichnet, daß die Gefäße in der Gasführung wechselweise hintereinander geschaltet werden.

7. Verfahren nach einem der vorhergehenden Ansprüche, dadurch gekennzeichnet, daß der Schrott übereinander angeordnete Gefäße umgekehrt zur hintereinander geschalteten Gasführung durchläuft.

8. Verfahren nach einem der vorhergehenden Ansprüche, dadurch gekennzeichnet, daß die beim Chargieren aus dem Gefäß austretende Abgase abgesaugt werden.

9. Verfahren nach einem der vorhergehenden Ansprüche, dadurch gekennzeichnet, daß die Vorwärmung aufgrund der laufend ermittelten Werte des Abgases und der Beschaffenheit des eingesetzten Schrotts über einen automatischen Rechner geregelt wird.

10. Vorrichtung zur Durchführung des Verfahrens nach einem der Ansprüche 1 bis 9, bei der die Vorwärmstation mindestens ein am oberen Ende mit einem verschließbaren Einfülltrichter (4) und mit einer Abgaszufuhr und am unteren Ende mit einer verschließbaren Chargieröffnung (5) und einer Abgasabfuhr versehenen schachtartiges Gefäß (6) aufweist, dadurch gekennzeichnet, daß der Einschmelzofen zumindestens zwischen einer Einschmelzstation (II) und der Vorwärmstation (I) horizontal längs verfahrbar ist.

11. Vorrichtung nach Anspruch 10, dadurch gekennzeichnet, daß das Gefäß (6) sich nach oben konisch verjüngt.

12. Vorrichtung nach Anspruch 10 oder 11, dadurch gekennzeichnet, daß die Chargieröffnung (5) des Gefäßes (6) von einem unten verschließbaren, mit mindestens einer Öffnung (10) für die Abgasabfuhr versehenen Gehäuse (9) umkleidet ist, und die korbartig ausgebildete Chargieröffnung auf den Außenumfang verteilte Öffnungen als Abgasabfuhr aufweist.

13. Vorrichtung nach Anspruch 10, 11 oder 12, dadurch gekennzeichnet, daß der Querschnitt des Gefäßes (6) so ausgebildet wird, daß sich zumindest annähernd die geringstmögliche Geschwindigkeit der Gasdurchströmung einstellt.

14. Vorrichtung nach einem der Ansprüche 10 bis 13, dadurch gekennzeichnet, daß das Gefäß (6) und/oder die Leitung der Abgaszufuhr (8) zumindest teilweise hitzebeständig ausgebildet sind.

15. Vorrichtung nach Anspruch 14, dadurch gekennzeichnet, daß die Hitzebeständigkeit durch eine feuerfeste Auskleidung bewirkt ist.

16. Vorrichtung nach Anspruch 14 oder 15, dadurch gekennzeichnet, daß die Gefäßwandung und/oder die Leitung der Abgaszufuhr, insbesondere mittels Wasser, gekühlt ist.

17. Vorrichtung nach einem der Ansprüche 10 bis 16, dadurch gekennzeichnet, daß der Einfülltrichter des Gefäßes eine Chargierkorbaufnahmeeinrichtung aufweist.

18. Vorrichtung nach einem der Ansprüche 10 bis 17, dadurch gekennzeichnet, daß an das Gefäß eine kontinuierliche Beschickungseinrichtung, insbesondere ein abgekapselter Bandförderer (26), angeschlossen ist.

19. Vorrichtung nach Anspruch 18, dadurch gekennzeichnet, daß zwischen der Beschickungseinrichtung und dem Gefäß ein unten entleerbarer Sammelbehälter (25) angeordnet ist.

20. Vorrichtung nach einem der Ansprüche 12 bis 19, dadurch gekennzeichnet, daß die korbartig ausgebildete, leicht nach unten gewölbte Chargieröffnung (5) seitlich wegklappbare Schalen aufweist.

21. Vorrichtung nach Anspruch 20, dadurch gekennzeichnet, daß die Chargieröffnung (5) zwei Schalen aufweist.

22. Vorrichtung nach einem der Ansprüche 10 bis 21, dadurch gekennzeichnet, daß das Gefäß im oberen Bereich eine Brennkammer aufweist.

23. Vorrichtung nach Anspruch 22, dadurch gekennzeichnet, daß der Einfülltrichter (4) als Brennkammer ausgebildet ist.

24. Vorrichtung nach Anspruch 22 oder 23, dadurch gekennzeichnet, daß mindestens ein mit zusätzlicher Energie beheizter Brenner von oben her in die Brennkammer mündet.

25. Vorrichtung nach einem der Ansprüche 11 bis 24, dadurch gekennzeichnet, daß in die der Abgasabfuhr nachgeschaltete Abgasleitung (11) hinter der Einmündung einer das Gefäß (6) umgehenden, absperrbaren Bypas-Leitung (16) ein Wärmeaustauscher (13) zur Vorwärmung des zur Abgasnachverbrennung zugeführten sauerstoffhaltigen Gases eingeschaltet ist.

26. Vorrichtung nach einem der Ansprüche 11 bis 25, dadurch gekennzeichnet, daß die Abgaszufuhr-Leitung (8) einen mit einem Gasschleier abdichtbaren Anschlußstutzen (27) enthält.

27. Vorrichtung nach Anspruch 26, dadurch gekennzeichnet, daß der Gasschleier durch aus der Abgasabfuhr rückgeführtes Abgas und/oder vorgewärmte Luft gebildet ist.

28. Vorrichtung nach einem der Ansprüche 11 bis 27, dadurch gekennzeichnet, daß unter der Chargieröffnung (5) eine mit einer verschließbaren Öffnung (20) für den Durchtritt des Einschmelzofens und mit einer Abgasabsaugung versehene Einkapselung (19) des Einschmelzofens angeordnet ist.

29. Vorrichtung nach einem der Ansprüche 11 bis 28, dadurch gekennzeichnet, daß die Einschmelzstation (II) einen mit einem Abgasabzug versehenen und zumindest zwischen einer Öffnungs- und einer Schließstellung bewegbaren Deckel (7) für den verfahrbaren Einschmelzofen aufweist.

30. Vorrichtung nach Anspruch 29, dadurch gekennzeichnet, daß der Deckel (7) mit mindestens einer Elektrode (18) oder mindestens einem Plasmabrenner versehen ist.

**Claims**

1. A process for melting down scrap or the like materials in at least one melting furnace, in particular a furnace provided with arc heating, in which the scrap is pre-heated directly by reheated waste gases of the melting furnace with an oxygen-containing gas being supplied in at least one vessel which can be emptied into the melting furnace, with the melting furnace being moved beneath the stationary vessel which forms part of a preheating station for charging the scrap which has been heated to high temperature,
characterised in that the melting furnace is moved back into the relevant operating position immediately after charging.

2. A process according to claim 1, characterised in that the air supplied is preheated by waste heat produced in the process.

3. A process according to Claim 1 or 2, characterised in that additional energy is used for preheating.

4. A process according to Claim 3, characterised in that the additional energy is introduced by burner heating.

5. A process according to one of the preceding Claims, characterised in that fluxes, in particular lime, are introduced into the vessel before charging the scrap.

6. A process according to one of the preceding Claims, using a melting furnace and at least two vessels arranged in substantially the same vertical position, characterised in that the vessels are connected alternately in series in the gas flow.

7. A process according to one of the preceding Claims, characterised in that the scrap passes through vessels arranged one above the other in the opposite direction to the gas flow which is in series.

8. A process according to one of the preceding Claims, characterised in that the waste gases emerging from the vessel upon charging are drawn off by suction.

9. A process according to one of the preceding Claims, characterised in that the preheating is controlled by an automatic computer on the basis of the continuously determined values of the waste gas and the nature of the scrap used.

10. Apparatus for performing the process according to one of Claims 1 to 9, in which the preheating station has at least one shaft-like vessel (6) provided at the upper end with a closable filling hopper (4) and with a waste gas supply means and at the lower end with a closable charging opening (5) and a waste gas removal means,
characterised in that the melting furnace is movable horizontally longitudinally at least between a melting station (II) and the preheating station (I).

11. Apparatus according to Claim 10, characterised in that the vessel (6) tapers conically at the top.

12. Apparatus according to Claim 10 or 11, characterised in that the charging opening (5) of the vessel (6) is surrounded by a housing (9) which can be closed at the bottom and is provided with at least one opening (10) for the removal of waste gas, and the cage-like charging opening has openings distributed on the outer periphery as waste gas removal means.

13. Apparatus according to Claim 10, 11 or 12, characterised in that the cross-section of the vessel (6) is designed so that at least approximately the lowest possible speed of the gas throughflow is set.

14. Apparatus according to one of Claims 10 to 13, characterised in that the vessel (6) and/or the pipe of the waste gas supply means (8) are designed at least in part to be heat-resistant.

15. Apparatus according to Claim 14, characterised in that the heat resistance is produced by a refractory lining.

16. Apparatus according to Claim 14 or 15, characterised in that the vessel wall and/or the pipe of the waste gas, supply means is cooled, in particular by means of water.

17. Apparatus according to one of Claims 10 to 16, characterised in that the charging hopper of the vessel has a charging cage holding means.

18. Apparatus according to one of Claims 10 to 17, characterised in that a continuous feed means, in particular an encapsulated conveyor belt (26), is connected to the vessel.

19. Apparatus according to Claim 18, characterised in that a collecting container (25) which can be emptied at the bottom is disposed between the feed means and the vessel.

20. Apparatus according to one of Claims 12 to 19, characterised in that the cage-like charging opening (5) which is curved slightly downwards has shells which can be folded away to the sides.

21. Apparatus according to Claim 20, characterised in that the charging opening (5) has two shells.

22. Apparatus according to one of Claims 10 to 21, characterised in that the vessel has a combustion chamber in its upper region.

23. Apparatus according to Claim 22, characterised in that the charging hopper (4) is designed as a combustion chamber.

24. Apparatus according to Claim 22 or 23, characterised in that at least one burner which is heated with additional energy opens into the combustion chamber from the top.

25. Apparatus according to one of Claims 11 to 24, characterised in that a heat exchanger (13) for preheating the oxygen-containing gas supplied for the reheating of the waste gas is inserted into the waste gas pipe (11) succeeding the waste gas removal means and behind the opening of a bypass pipe (16) which can be shut off and which bypasses the vessel (6).

26. Apparatus according to one of Claims 11 to 25, characterised in that the waste gas supply pipe (8) contains a connecting sleeve (27) which can be sealed off with a gas curtain.

27. Apparatus according to Claim 26, characterised in that the gas curtain is formed by waste gas recycled from the waste gas removal means and/or preheated air.

28. Apparatus according to one of Claims 11 to 27, characterised in that a casing (19) of the melting furnace provided with a closable opening (20) for the passage of the melting furnace and with a waste gas suction removal means is disposed beneath the charging opening (5).

29. Apparatus according to one of Claims 11 to 28, characterised in that the melting station (II) has a cover (7) provided with a waste gas removal means and which is movable at least between an open and a closed position for the displaceable melting furnace.

30. Apparatus according to claim 29, characterised in that the cover (7) is provided with at least one electrode (18) or at least one plasma burner.

**Revendications**

1. Procédé pour fondre des ferrailles ou matières analogues dans au moins un four de fusion, en particulier un four muni d'un dispositif de chauffage à arc électrique, dans lequel les ferrailles sont préchauffées directement dans au moins un récipient qui peut être vidé dans le four de fusion, par les gaz d'échappement du four de fusion brûlés par amenée d'un gaz contenant de l'oxygène, le four de fusion, pour le chargement des ferrailles chauffées à haute température, étant déplacé sous le récipient agencé de façon stationnaire et formant partie d'un poste de préchauffage, caractérisé en ce que le four de fusion est ramené directement après le chargement dans la position de travail respective.

2. Procédé selon la revendication 1, caractérisé en ce que l'air amené est préchauffé par la chaleur perdue créée dans le procédé.

3. Procédé selon la revendication 1 ou 2, caractérisé en ce que de l'énergie supplémentaire est utilisée pour le préchauffage.

4. Procédé selon la revendication 3, caractérisé en ce que l'énergie supplémentaire est apportée par un dispositif de chauffage à brûleurs.

5. Procédé selon l'une des revendications précédentes, caractérisé en ce que, avant le chargement des ferrailles, des granulats, en particulier de la chaux, sont amenés dans le récipient.

6. Procédé selon une des revendications précédentes lorsqu'on utilise un four de fusion et au moins deux récipients agencés généralement à la même hauteur, caractérisé en ce que les récipients sont montés l'un derrière l'autre, alternativement, par rapport au flux de gaz.

7. Procédé selon une des revendications précédentes, caractérisé en ce que les ferrailles traversent des récipients agencés l'un au-dessus de l'autre, inversement au flux de gaz.

8. Procédé selon une des revendications précédentes, caractérisé en ce que les gaz d'échappement sortant du récipient lors du chargement sont aspirés.

9. Procédé selon une des revendications précédentes, caractérisé en ce que le préchauffage est réglé par un calculateur automatique en fonction des caractéristiques continuellement déterminées du gaz d'échappement et de la nature des ferrailles utilisées.

10. Dispositif pour la mise en oeuvre du procédé selon une des revendications 1 à 9, dans lequel le poste de préchauffage comporte au moins un récipient (6) en forme de cuve, muni, à son extrémité supérieure, d'une trémie de remplissage fermable (4) et d'une amenée de gaz d'échappement et, à son extrémité inférieure, d'une ouverture de chargement fermable (5) et d'une évacuation de gaz d'échappement, caractérisé en ce que le four de fusion est déplaçable horizontalement et longitudinalement au moins entre un poste de fusion (II) et le poste de préchauffage (I).

11. Dispositif selon la revendication 10, caractérisé en ce que le récipient (6) se rétrécit de façon conique vers le haut.

12. Dispositif selon la revendication 10 ou 11, caractérisé en ce que l'ouverture de chargement (5) du récipient (6) est revêtue d'un carter (9) fermable vers le bas, muni d'au moins une ouverture (10) pour l'évacuation du gaz d'échappement, et l'ouverture de chargement réalisé en forme de panier présente des ouvertures réparties à sa périphérie externe en tant qu'évacuation du gaz d'échappement.

13. Dispositif selon la revendication 10, 11 ou 12, caractérisé en ce que la section transversale du récipient (6) est telle que l'on obtient au moins approximativement la vitesse la plus faible possible du flux de gaz.

14. Dispositif selon une des revendications 10 à 13, caractérisé en ce que le récipient (6) et/ou le conduit d'amenée du gaz d'échappement (8) sont réalisés au moins partiellement de façon résistant à la chaleur.

15. Dispositif selon la revendication 14, caractérisé en ce que la résistance à la chaleur est obtenue par une garniture réfractaire.

16. Dispositif selon la revendication 14 ou 15, caractérisé en ce que la paroi du récipient et/ou le conduit d'amenée du gaz d'échappement sont refroidis, en particulier par de l'eau.

17. Dispositif selon une des revendications 10 à 16, caractérisé en ce que la trémie de remplissage du récipient présente un dispositif de réception du panier de chargement.

18. Dispositif selon une des revendications 10 à 17, caractérisé en ce que, au récipient, est raccordé un dispositif de remplissage continu, en particulier un transporteur à bande blindé (26).

19. Dispositif selon la revendication 18, caractérisé en ce que, entre le dispositif de remplissage et le récipient, est agencé un réservoir de collecte (25) qui peut être vidé par le bas.

20. Dispositif selon une des revendications 12 à 19, caractérisé en ce que l'ouverture de chargement (5), légèrement cintrée vers le bas et réalisée en forme de panier, présente des coquilles qui peuvent basculer latéralement.

21. Dispositif selon la revendication 20, caractérisé en ce que l'ouverture de chargement (5) présente deux coquilles.

22. Dispositif selon une des revendications 10 à 21,
caractérisé en ce que le récipient présente, dans la zone supérieure, une chambre de brûlage.

23. Dispositif selon la revendication 22, caractérisé en ce que la trémie de remplissage (4) est réalisée en tant que chambre de brûlage.

24. Dispositif selon la revendication 22 ou 23, caractérisé en ce qu'au moins un brûleur, chauffé par de l'énergie supplémentaire, débouche du haut dans la chambre de brûlage.

25. Dispositif selon une des revendications 11 à 24, caractérisé en ce qu'un échangeur thermique (13), pour préchauffer le gaz contenant de l'oxygène amené au dispositif de rebrûlage du gaz d'échappement, est monté dans le conduit du gaz d'échappement (11) prévu en aval de l'évacuation du gaz d'échappement, derrière l'embouchure d'un bipasse (16), qui peut être fermé, évitant le récipient (6).

26. Dispositif selon une des revendications 11 à 25, caractérisé en ce que le conduit d'amenée du gaz d'échappement (8) comporte un raccord (27) qui peut être étanchéifié par un ballon de gaz.

27. Dispositif selon la revendication 26, caractérisé en ce que le ballon de gaz est formé par de l'air préchauffé et/ou du gaz d'échappement renvoyé de l'évacuation du gaz d'échappement.

28. Dispositif selon une des revendications 11 à 27, caractérisé en ce que, sous l'ouverture de chargement (5), est prévu un blindage (19) du four de fusion, muni d'une aspiration du gaz d'échappement et d'une ouverture fermable (20) pour le passage du four de fusion.

29. Dispositif selon une des revendications 11 à 28, caractérisé en ce que le poste de fusion (II) présente un couvercle (7) pour le four de fusion mobile, muni d'une évacuation du gaz d'échappement et déplaçable au moins entre une position ouverte et une position fermée.

30. Dispositif selon la revendication 29, caractérisé en ce que le couvercle (7) est muni d'au moins une électrode (18) ou d'au moins un brûleur à plasma.

# FIG.1

EP 0 225 939 B1

# FIG.2

# FIG.3

# FIG.4

EP 0 225 939 B1